# EUROPEAN PATENT APPLICATION

(11) **EP 4 620 819 A1**
(43) Date of publication of application: **24.09.2025**
(21) Application number: 22970019.0
(22) Date of filing: 27.12.2022
(51) Int. Cl.: B64D 25/00, B64C 39/02, B64D 1/02, B64D 17/80, B64U 50/10, B64U 70/80, B64U 101/40, B64U 101/69

(54) **UNMANNED AIRCRAFT**

(71) Applicant: Kubota Corporation, Osaka 556-8601 (JP)
(72) Inventor: SEINO, Kohei, Sakai-shi, Osaka 590-0908 (JP)
(74) Representative: Cabinet Beau de Loménie
(86) International application number: PCT/JP2022/048157
(87) International publication number: WO 2024/142225

(57) **Abstract**

An unmanned aerial vehicle includes a plurality of rotors, the unmanned aerial vehicle being capable of flying with a ground work machine connected to a body. The unmanned aerial vehicle includes: a control device that controls flight of the unmanned aerial vehicle; at least one parachute connected to the body or the ground work machine; and at least one airbag provided on the body or the ground work machine.

## Description

### TECHNICAL FIELD

The present disclosure relates to an unmanned aerial vehicle.

### BACKGROUND ART

An unmanned aerial vehicle (UAV) is an aircraft that structurally cannot accommodate human occupants and is capable of flight through remote control or autonomous operation. A rotary-wing type unmanned aerial vehicle is a UAV that generates lift using propellers, namely rotary wings, which rotate around an axis. A small unmanned aerial vehicle equipped with multiple rotary wings (Multi-Rotor UAV) is also called a "drone", "multirotor", or "multicopter", and is widely used for applications including aerial photography, surveying, logistics, and agricultural spraying.

Patent Document 1 describes an unmanned aerial vehicle (unmanned flying body) that changes its flight position in coordination with the operation of an agricultural machine.

### CITATION LIST

### PATENT LITERATURE

Patent Document No. 1: Japanese Patent Application Publication No. 2022-104737

### SUMMARY OF INVENTION

### TECHNICAL PROBLEM

There is a demand for an unmanned aerial vehicle capable of flying with a ground work machine connected to its body.

The present disclosure provides an unmanned aerial vehicle capable of flying with ground work machine connected to its body.

### SOLUTION TO PROBLEM

In an exemplary and non-limiting embodiment, an unmanned aerial vehicle of the present disclosure including a plurality of rotors, the unmanned aerial vehicle being capable of flying with a ground work machine connected to a body, the unmanned aerial vehicle includes: a control device that controls flight of the unmanned aerial vehicle; at least one parachute connected to the body or the ground work machine; and at least one airbag provided on the body or the ground work machine.

In an exemplary and non-limiting embodiment, an unmanned aerial vehicle of the present disclosure including a plurality of rotors, the unmanned aerial vehicle being capable of flying with a ground work machine connected to a body, the unmanned aerial vehicle includes a control device that controls flight of the unmanned aerial vehicle, wherein the control device releases a connection between the ground work machine and the body when detecting an abnormality of the plurality of rotors during flight.

### ADVANTAGEOUS EFFECTS OF INVENTION

According to embodiments of the present disclosure, an unmanned aerial vehicle capable of flying with a ground work machine connected to its body is provided.

### BRIEF DESCRIPTION OF DRAWINGS

FIG. **1A** is a block diagram schematically showing several examples of rotation drive devices for rotating rotors in an unmanned aerial vehicle equipped with a plurality of rotors.
FIG. **1B** is a plan view schematically showing one example of a basic configuration of an unmanned aerial vehicle equipped with a plurality of rotors.
FIG. **1C** is a side view schematically showing one example of a basic configuration of an unmanned aerial vehicle equipped with a plurality of rotors.
FIG. **1D** is a plan view schematically showing another example of a basic configuration of an unmanned aerial vehicle equipped with a plurality of rotors.
FIG. **2A** is a block diagram showing a basic configuration example of a battery-driven multicopter.
FIG. **2B** is a block diagram showing a basic configuration example of a series hybrid type multicopter.
FIG. **2C** is a block diagram showing a basic configuration example of a parallel hybrid type multicopter.
FIG. **3A** is a block diagram showing an example of a configuration of a multicopter.
FIG. **3B** is a block diagram showing an example of a configuration of a multicopter.
FIG. **3C** is a diagram schematically showing an example of a connection mechanism of a multicopter.
FIG. **4A** is a flowchart showing an example of an operation of a control device according to the present embodiment.
FIG. **4B** is a flowchart showing an example of an operation of a control device according to the present embodiment.
FIG. **4C** is a flowchart showing an example of an operation of a control device according to the present embodiment.
FIG. **5** is a plan view schematically showing a flight path of a multicopter.
FIG. **6A** is a diagram schematically showing how a multicopter, which is flying with an implement connected to its body, releases a connection between the implement and the body during flight.
FIG. **6B** is a diagram schematically showing how a multicopter, which is flying with an implement connected to its body, releases a connection between the implement and the body during flight.
FIG. **6C** is a diagram schematically showing how a multicopter, which is flying with an implement connected to its body, releases a connection between the implement and the body during flight.
FIG. **6D** is a diagram schematically showing how a multicopter, which is flying with an implement connected to its body, releases a connection between the implement and the body during flight.
FIG. **6E** is a diagram schematically showing how a multicopter, which is flying with an implement connected to its body, releases a connection between the implement and the body during flight.
FIG. **6F** is a diagram schematically showing how a multicopter, which is flying with an implement connected to its body, releases a connection between the implement and the body during flight.
FIG. **7A** is a perspective view schematically showing an example of a basic configuration of a multicopter.
FIG. **7B** is a perspective view schematically showing an example of a basic configuration of a multicopter.
FIG. **8** is a block diagram showing an example of hardware configuration of the control device in the present embodiment.
FIG. **9** is a schematic diagram showing a configuration example of a system including a multicopter.

### DESCRIPTION OF EMBODIMENTS

An unmanned aerial vehicle equipped with a plurality of rotors includes a rotation drive device that rotates the rotors (hereinafter referred to as "propellers"). Hereinafter, such an unmanned aerial vehicle is referred to as a "multicopter".

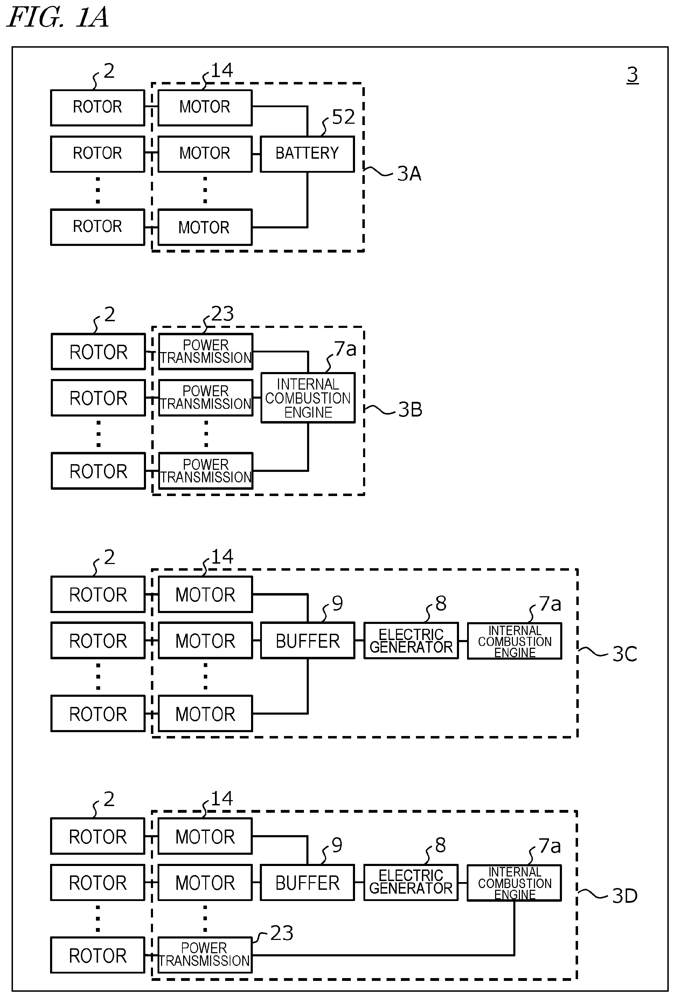

The configuration of rotation drive devices equipped in multicopters exists in various forms. FIG. **1A** is a schematic block diagram showing four examples of rotation drive device **3** in the present disclosure.

The first rotation drive device **3A** shown in FIG. **1A** includes a plurality of electric motors (hereinafter referred to as "motors") **14** that rotate a plurality of rotors **2,** and a battery **52** that stores electric power to be supplied to each motor **14.** The battery **52** is, for example, a secondary battery such as a polymer-type lithium-ion battery. Each rotor **2** is connected to the output shaft of its corresponding motor **14** and is rotated by the motor **14.** To increase payload and/or flight duration, it is necessary to increase the power storage capacity of battery **52.** While the power storage capacity of battery **52** can be increased by making battery **52** larger, enlarging battery **52** leads to an increase in weight.

The second rotation drive device **3B** shown in FIG. **1A** includes a power transmission system **23** mechanically connected to rotor **2,** and an internal combustion engine **7a** that provides driving force (torque) to power transmission system **23.** The power transmission system **23** includes mechanical components such as gears or belts and transmits torque from the output shaft of internal combustion engine **7a** to rotor **2.** The internal combustion engine **7a** can efficiently generate mechanical energy through fuel combustion. Examples of internal combustion engine **7a** may include gasoline engines, diesel engines, and hydrogen engines.

The third rotation drive device **3C** shown in FIG. **1A** includes a plurality of motors **14,** a power buffer **9** that stores electric power to be supplied to each motor **14,** an electric generator **8** such as an alternator that generates electric power, and an internal combustion engine **7a** that provides mechanical energy for power generation to the electric generator **8.** While a typical example of power buffer **9** is a battery such as a secondary battery, it may also be a capacitor. In the third rotation drive device **3C,** even when the power buffer **9** does not have a large power storage capacity, it is possible to increase payload and/or flight duration because the electric generator **8** generates electric power using the driving force (mechanical energy) of internal combustion engine **7a.** This type of drive is called "series hybrid drive". The electric generator **8** and internal combustion engine **7a** in series hybrid drive are called a "range extender" as they extend the flight distance of the multicopter.

The fourth rotation drive device **3D** shown in FIG. **1A** includes a plurality of motors **14,** a power buffer **9** that stores electric power to be supplied to each motor **14,** an electric generator **8** such as an alternator that generates electric power, an internal combustion engine **7a** that provides driving force to the electric generator **8** for power generation, a power transmission system **23** that transmits driving force generated by the internal combustion engine **7a** to the rotor **2** to rotate the rotor **2.** At least one rotor **2** of the plurality of rotors **2** is rotated by the internal combustion engine **7a,** while other rotors **2** are rotated by the motor **14.** In the fourth rotation drive device **3D,** since mechanical energy generated by internal combustion engine **7a** can be utilized for rotor rotation without conversion to electrical energy, energy utilization efficiency can be enhanced. This type of drive is called "parallel hybrid drive".

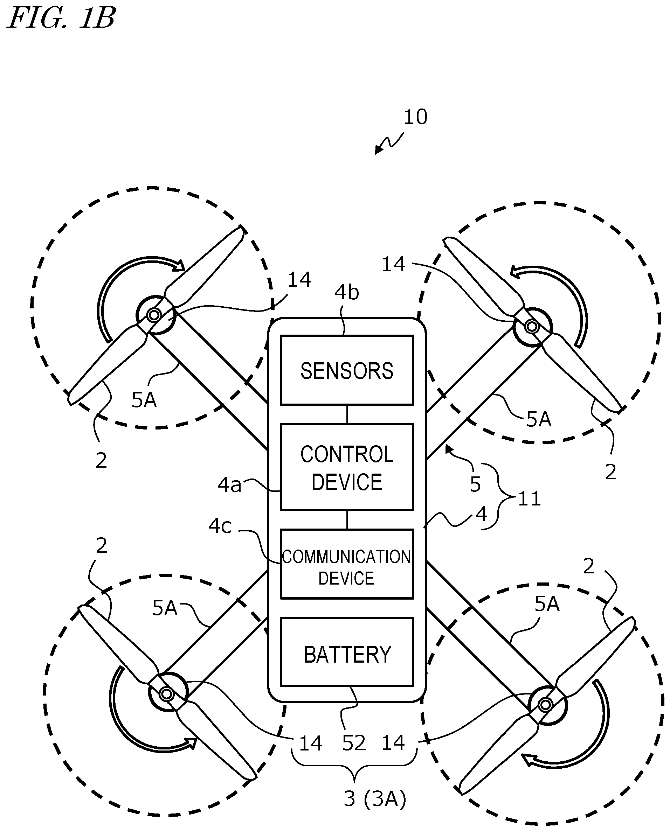

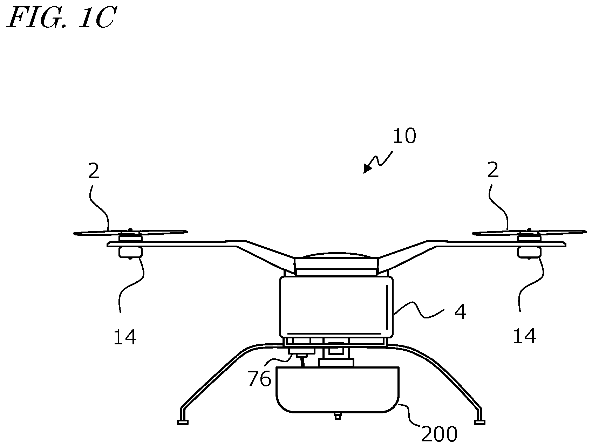

FIG. **1B** is a plan view schematically showing a basic configuration example of multicopter **10.** In the configuration example of FIG. **1B****,** a rotation drive device **3** is equipped with the first rotation drive device **3A** shown in FIG. **1A****.** That is, in this example, rotation drive device **3 (3A)** includes motors **14** and a battery **52.** FIG. **1C** is a side view schematically showing the multicopter **10.**

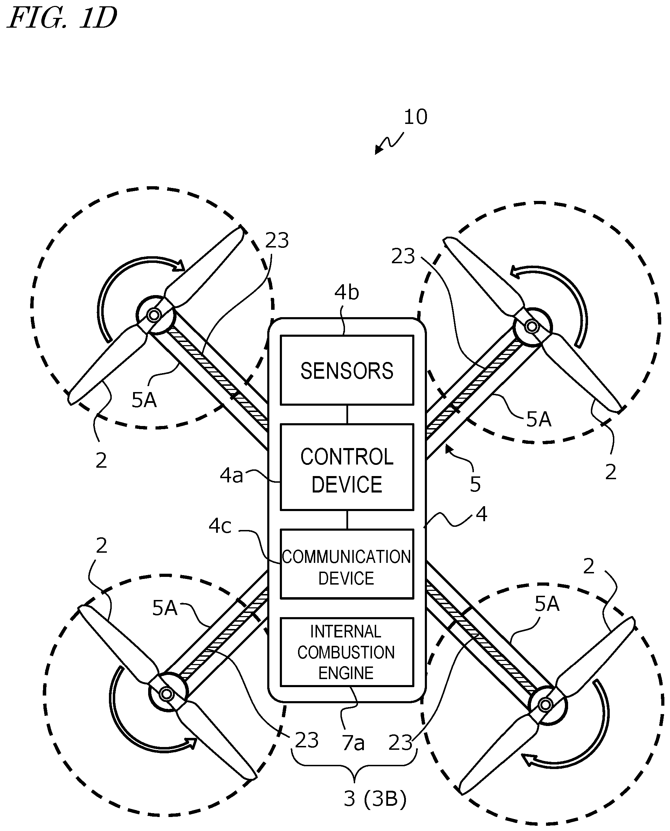

A multicopter **10** shown in Figs. **1****B** and **1C** includes a plurality of rotors **2,** a main body **4,** and a body frame **5** that supports rotors **2** and main body **4.** The body frame **5** supports the main body **4** at its central portion and supports the plurality of rotors **2** rotatably at the plurality of arms **5A** extending outward from the central portion. The motors **14** that rotate rotors **2** are provided near the ends of each arm **5A.** The main body **4** and body frame **5** may be collectively referred to as "body **11".**

In the example of FIG. **1B****,** the multicopter **10** is a quad-type multicopter (quadcopter) equipped with four rotors **2.** The rotors **2** positioned on the same diagonal line rotate in the same direction (clockwise or counterclockwise), while rotors **2** positioned on different diagonal lines rotate in opposite directions.

The main body **4** includes a control device **4a** that controls the operation of devices and components mounted on multicopter **10,** sensors **4b** connected to the control device **4a,** a communication device **4c** connected to the control device **4a,** and a battery **52.**

The control device **4a** may include, for example, a flight control device such as a flight controller and a higher-level computer (companion computer). The companion computer may perform advanced computational processing such as image processing, obstacle detection, and obstacle avoidance based on sensor data acquired by the sensors **4b.**

The sensors **4b** may include an acceleration sensor, angular velocity sensor, geomagnetic sensor, atmospheric pressure sensor, altitude sensor, temperature sensor, flow sensor, imaging device, laser sensor, ultrasonic sensor, obstacle contact sensor, and GNSS (Global Navigation Satellite System) receiver. The acceleration sensor and angular velocity sensor may be mounted on the main body **4** as components of an IMU (Inertial Measurement Unit). Examples of laser sensors may include a laser range finder used for measuring distance to the ground, and **2D** or **3D** LiDAR (light detection and ranging).

The communication device **4c** may include a wireless communication module for signal transmission and reception with a ground-based transmitter or ground control station (GCS) via an antenna, and a mobile communication module that utilizes cellular communication networks. The communication device **4c** is configured to receive signals such as control commands transmitted from the ground and transmit sensor data such as image data acquired by sensors **4b** as telemetry information. The communication device **4c** may also include functions for communication between multicopters and satellite communication capabilities. The control device **4a** may connect to computers in the cloud through the communication device **4c.** The computer in the cloud may execute part or all of the functions of the companion computer.

A battery **52** is a secondary battery that is configured to store electric power through charging and supply electric power to motors **14** through discharging. Through the operation of battery **52** and the plurality of motors **14,** a plurality of rotors **2** can be rotationally driven to generate desired thrust. Each of the plurality of rotors **2** generally includes a plurality of blades with fixed pitch angles and generates thrust through rotation. The pitch angles may be variable. Not all of the plurality of rotors **2** need to have the same diameter (propeller diameter), and one or more rotors **2** may have a larger diameter than other rotors **2.** The thrust (static thrust) generated by rotating the rotor **2** is generally proportional to the cube of the rotor's diameter. Therefore, when the rotors **2** of different diameters are equipped, the rotors **2** with relatively large diameters may be called "main rotors" and the rotors **2** with relatively small diameters may be called "sub-rotors". Regardless of the size of the diameter, the rotors **2** capable of generating relatively large thrust and the rotors **2** capable of generating relatively small thrust may be included depending on the configuration of rotation drive device **3.** In such case, the rotors **2** capable of generating relatively large thrust may be called "main rotors" and the rotors **2** capable of generating relatively small thrust may be called "sub-rotors". For example, the rotors **2** that generate relatively large thrust per rotation may be called "main rotors" and the rotors **2** that generate relatively small thrust per rotation may be called "sub-rotors". In one example, main rotors may be positioned more inward than sub-rotors. In other words, the rotors **2** may be positioned such that the distance from the center of the body to the rotation axis of each main rotor is shorter than the distance from the center to the rotation axis of each sub-rotor.

In this example, the rotation drive device **3** has a plurality of motors **14.** As mentioned above, the rotation drive device **3** may include the internal combustion engine **7a.**

FIG. **1D** is a plan view schematically showing a basic configuration example of a multicopter **10** equipped with the second rotation drive device **3B.** In the example shown in FIG. **1D****,** the internal combustion engine **7a** is supported by the main body **4.** In this example, the driving force generated by internal combustion engine **7a** is transmitted to the plurality of rotors **2** through a plurality of power transmission systems **23** to rotate each rotor **2.** The control device **4a** may change the rotational speed of individual rotors **2** by controlling each power transmission system **23.** Rotation drive device **3B** may include a mechanism for changing the pitch angle of blades of each of the plurality of rotors **2.** In that case, the control device **4a** may adjust the lift generated by each rotor **2** by controlling that mechanism to change the blade pitch angles.

In a "parallel hybrid drive" where some of the plurality of rotors **2** are rotated by the internal combustion engine **7a** and other rotors **2** are rotated by the motors **14,** the internal combustion engine **7a** and battery **52** are supported by the main body **4.** At least one of the plurality of rotors **2** is connected to the internal combustion engine **7a** through the power transmission system **23,** and other rotors **2** are connected to the motors **14.**

In such a parallel hybrid drive, the diameter of one or more rotors **2** rotated by the internal combustion engine **7a** may be larger than the diameter of other rotors **2** rotated by the motors **14.** In other words, the internal combustion engine **7a** may be used for rotating the main rotors and the motors **14** may be used for rotating the sub-rotors. In such case, the main rotors are mainly used for generating thrust, and the sub-rotors are used for both generating thrust and attitude control. The main rotors may be called "booster rotors" and the sub-rotors may be called "attitude control rotors".

In the parallel hybrid drive, the internal combustion engine is used for both thrust generation and power generation. By selectively transmitting driving force (torque) generated by the internal combustion engine to either or both of the rotor and electric generator, it is possible to achieve balanced thrust generation and power generation.

When a multicopter is equipped with an internal combustion engine and uses the internal combustion engine for at least one of thrust generation and power generation, this contributes to increased payload and flight duration. It is desirable to perform attitude control of the multicopter by rotating propellers using motors, which have superior response characteristics compared to internal combustion engines. Therefore, in applications where accurate attitude control of the multicopter is required, it is desirable to adopt parallel hybrid drive or series hybrid drive to increase payload and flight duration. Note that when the rotation drive device 3 includes a mechanism for changing the pitch angle of blades of each of the plurality of the rotors 2, the attitude can also be adjusted by changing the pitch angle of each blade.

Through increased payload and flight duration, the applications of multicopters can be further expanded. For example, in the agricultural field, multicopters are currently being used for agricultural chemical spraying or crop growth monitoring. Various agricultural work can be performed from the air by connecting various ground work machines (hereinafter may be simply referred to as "work machines") to the multicopter. Agricultural work machines are sometimes referred to as "implements". Examples of implements may include sprayers for spraying chemicals on crops, mowers, seeders, spreaders (fertilizer applicators), rakes, balers, harvesters, plows, harrows, or rotary tillers. Work vehicles such as tractors are not included in "implements" in this disclosure.

In the example shown in FIG. **1C****,** an implement **200** capable of dispersing substances such as agricultural chemicals or fertilizers onto a field or crops in the field is connected to multicopter **10.** Increased payload and flight duration enable the implement **200** to achieve a larger size and/or multi-functionality. For example, by changing the implement **200** connected to multicopter **10,** various ground operations (agricultural work) including liquid application, granular application, fertilization, thinning, weeding, transplanting, direct seeding, and harvesting can be performed. The implement **200** may be equipped with mechanisms such as robotic hands. In that case, a single implement **200** can perform various ground operations. When the implement **200** is equipped with space large enough to store materials, the implement **200** can also transport agricultural materials or harvested crops over a wide area. There are various forms of connecting the implement **200** to the multicopter **10.** The multicopter **10** may suspend and tow the implement **200** using a cable. The implement **200** towed by the multicopter **10** can perform ground operations while being towed during flight or hovering of multicopter **10.** The implement **200** during operation may be in the air or on the ground.

In the example shown in FIG. **1C****,** the multicopter **10** is equipped with power supply **76.** The power supply **76** is a device that supplies power to the implement **200** from driving energy sources such as a battery **52** or an electric generator **8** included in the multicopter **10.** Various functions of the implement **200** may be performed using this power. The implement **200** includes actuators such as motors that operate using power obtained from the power supply **76** of the multicopter **10.** The implement **200** preferably includes a battery for storing power.

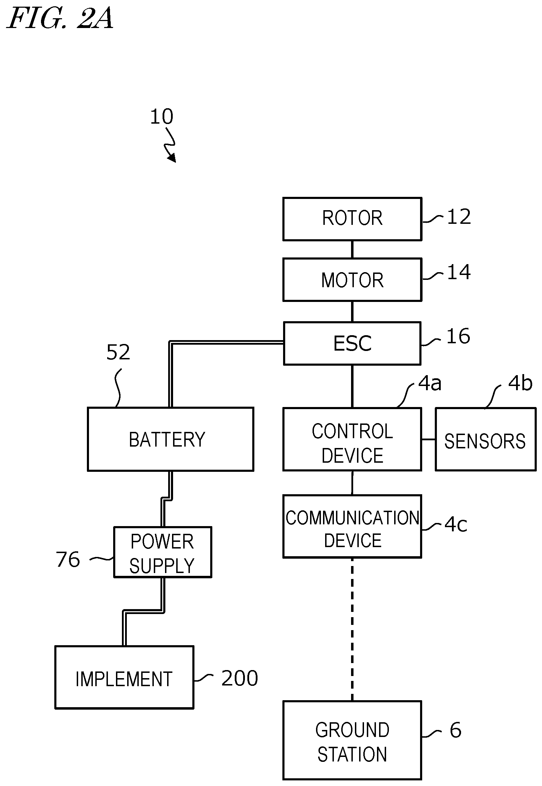

FIG. **2A** shows a block diagram of a basic configuration example of a battery-driven multicopter **10.**

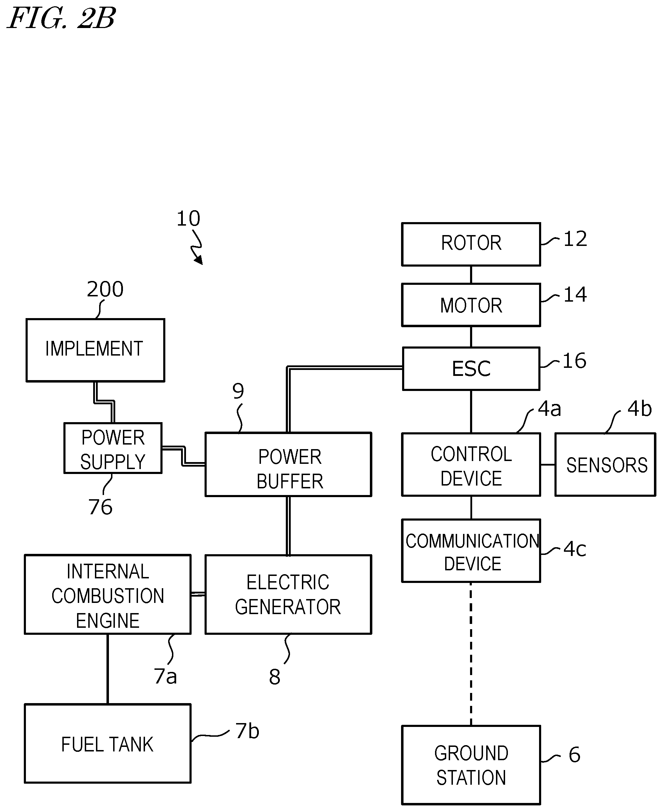

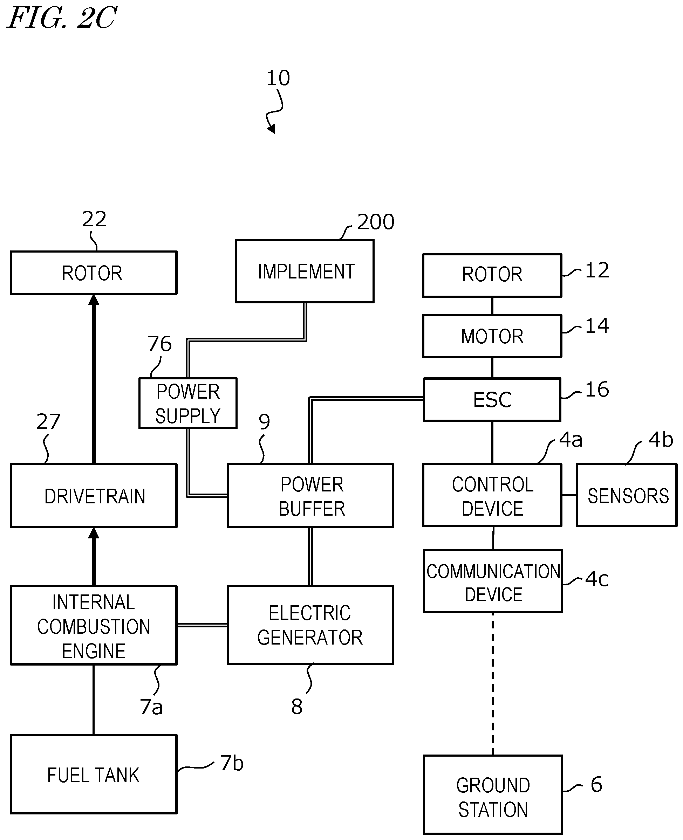

The battery-driven multicopter **10** includes a plurality of rotors **12,** a plurality of motors **14,** each driving a respective one of the plurality of rotors **12,** a plurality of ESCs (Electric Speed Controllers) **16** each including a motor drive circuit that drives a respective one of the plurality of motors **14,** a battery **52** that supplies power to each of the plurality of motors **14** through each respective ESC **16,** a control device **4a** for controlling a plurality of ESCs **16** to control attitude while flying, sensors **4b,** a communication device **4c,** and a power supply **76** that is electrically connected to the battery **52.** In FIG. **2A****,** for simplicity, the rotor **12,** the motor **14,** and the ESC **16** are each shown by a single block, but the numbers of rotors **12,** motors **14,** and ESCs **16** are each plural. This also applies to Figs. **2B** and **2C****.** The ESC **16** may be included in the control device **4a.**

The control device **4a** may receive control commands wirelessly from, for example, a ground station **6** on the ground through the communication device **4c.** The number of ground stations **6** is not limited to one, and the grand station 6 may be distributed across a plurality of locations. The communication device **4c** may also wirelessly receive control commands from an operator's control device on the ground. The control device **4a** may have functions to automatically or autonomously execute takeoff, flight, obstacle avoidance, and landing operations based on sensor data obtained from the sensors **4b.** The control device **4a** may be configured to communicate with the implement **200** connected to the power supply **76** and obtain signals indicating the state of the implement **200.** Additionally, the control device **4a** may provide signals to control the operation of the implement **200.** Furthermore, the implement **200** may generate signals to instruct the operation of multicopter **10** and transmit them to the control device **4a.** Such communication between the control device **4a** and the implement **200** may be conducted through wired or wireless means.

FIG. **2B** is a block diagram showing a basic configuration example of a series hybrid drive type multicopter **10.** Like the battery-driven multicopter **10,** the series hybrid drive type multicopter **10** includes a plurality of rotors **12,** a plurality of motors **14,** a plurality of ESCs **16,** a control device **4a,** sensors **4b,** and a communication device **4c.** The series hybrid drive type multicopter **10** shown in the figure further includes an internal combustion engine **7a,** a fuel tank **7b** that stores fuel for the internal combustion engine **7a,** an electric generator **8** that is driven by the internal combustion engine **7a** to generate electric power, a power buffer **9** that temporarily stores electric power generated by the electric generator **8,** and a power supply **76** that is electrically connected to the power buffer **9.** The power buffer **9** is, for example, a battery such as a secondary battery. Electric power generated by the electric generator **8** is supplied to the motors **14** through the power buffer **9** and the ESCs **16.** Additionally, the electric power generated by the electric generator **8** may be supplied to the implement **200** through the power supply **76.**

FIG. **2C** is a block diagram showing a basic configuration example of a parallel hybrid drive type multicopter **10.** Like the series hybrid drive type multicopter **10,** the parallel hybrid drive type multicopter **10** includes a plurality of rotors **12,** a plurality of motors **14,** each driving a respective one of the plurality of rotors **12,** a plurality of ESCs **16,** a control device **4a,** sensors **4b,** a communication device **4c,** an internal combustion engine **7a,** a fuel tank **7b,** an electric generator **8,** a power buffer **9,** and a power supply **76.** The parallel hybrid drive type multicopter **10** further includes a drivetrain **27** that transmits driving force from the internal combustion engine **7a,** and the rotor **22** that rotates upon the receiving driving force from the internal combustion engine **7a** through the drivetrain **27.** The rotor **12** and rotor **22** may be distinguished by calling one "first rotor" and the other "second rotor". The number of rotors **22** connected to drivetrain **27** and rotated may be one or two or more.

In the parallel hybrid drive type multicopter **10,** the internal combustion engine **7a** not only drives the electric generator **8** to generate power, but also mechanically transmits energy to the rotor **22** to rotate the rotor **22.** In contrast, in the series hybrid drive type multicopter **10,** all rotors **12** are rotated by electric power generated by the electric generator **8.** Therefore, in the series hybrid drive type multicopter **10,** when the electric generator **8** is, for example, a fuel cell, the internal combustion engine **7a** is not an essential component.

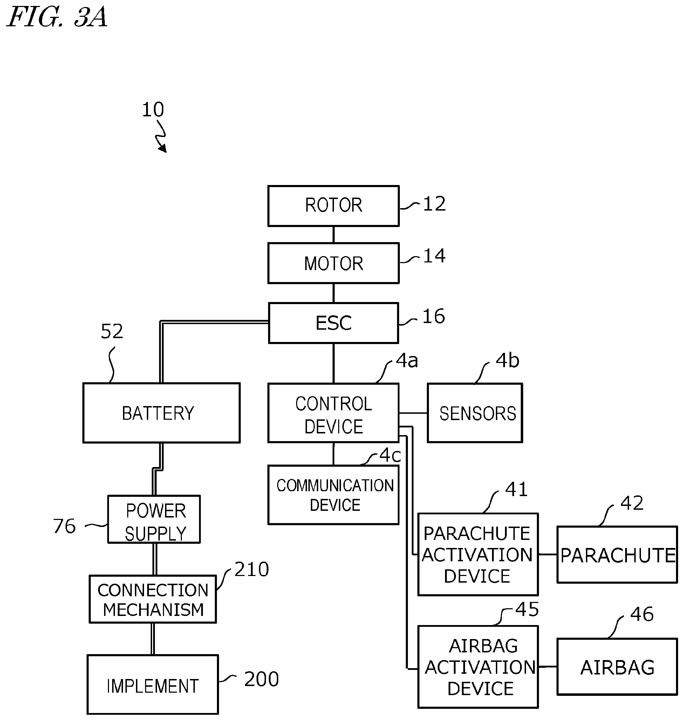

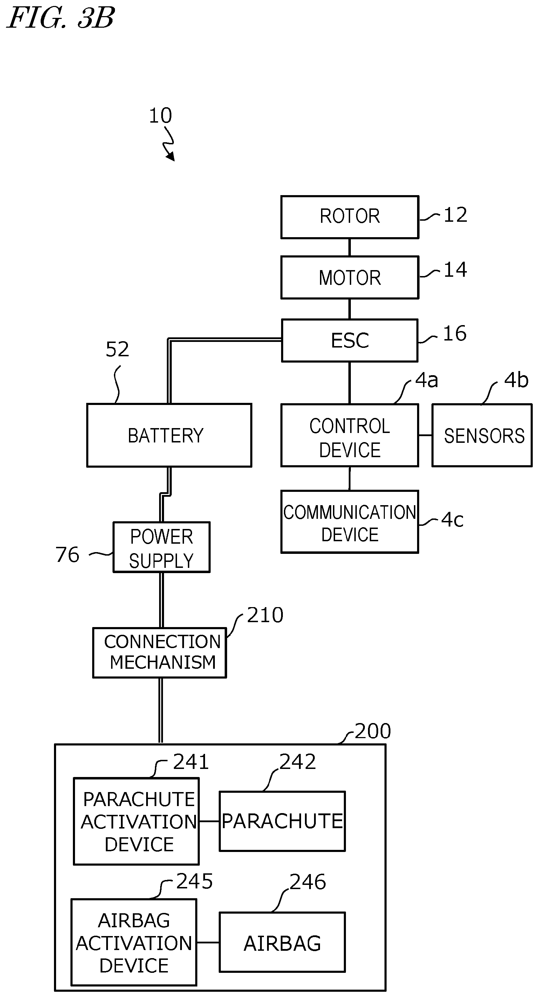

FIGS. **3A** and **3B** show block diagrams illustrating examples of the configuration of an unmanned aerial vehicle (multicopter) according to an embodiment of the present disclosure. The unmanned aerial vehicle (multicopter) and the control system and control method for controlling the flight of the unmanned aerial vehicle (multicopter) according to an embodiment of the present disclosure will be explained with reference to FIGS. **3A** and **3B****.**

FIG. **3A** is a block diagram showing an example of the configuration of a battery-driven multicopter **10.** The configuration shown in FIG. **3A** includes, in addition to the configuration of the battery-driven multicopter **10** shown in FIG. **2A****,** a parachute **42** connected to the body **11** and an airbag **46** provided on the body **11.** The multicopter **10** shown in FIG. **3A** is capable of flying with an implement **200** connected to the body **11** (or main body **4**), as shown in the example of FIG. **1C****.** The multicopter **10** shown in FIG. **3A** further includes a parachute activation device **41** that activates (deploys) the parachute **42** and an airbag activation device **45** that activates the airbag **46.** The parachute activation device **41** and the airbag activation device **45** are each independently connected to the control device **4a.** The control device **4a** controls the activation (deployment) of the parachute **42** by providing a signal to control the activation (deployment) of the parachute **42** to the parachute activation device **41.** The control device **4a** controls the activation of the airbag **46** by providing a signal to control the activation of the airbag **46** to the airbag activation device **45.** The multicopter **10** shown in FIG. **3A** further includes a connection mechanism **210** that connects the body **11** (or main body **4**) and the implement **200.**

FIG. **3B** is a block diagram showing another example of the configuration of a battery-driven multicopter **10.** The configuration shown in FIG. **3B** includes, in addition to the configuration of the battery-driven multicopter **10** shown in FIG. **2A****,** a parachute **242** connected to the implement **200** and an airbag **246** provided on the implement **200.** The multicopter **10** shown in FIG. **3B** is capable of flying with an implement **200** connected to the body **11** (or main body 4), as shown in the example of FIG. **1C****.** The multicopter **10** shown in FIG. **3B** further includes a parachute activation device **241** that activates (deploys) the parachute **242** and an airbag activation device **245** that activates the airbag **246.** The control device **4a** communicates with the implement **200** connected to the power supply **76.** The control device **4a** controls the activation (deployment) of the parachute **242** by providing a signal to control the activation (deployment) of the parachute **242** to the parachute activation device **241.** The control device **4a** controls the activation of the airbag **246** by providing a signal to control the activation of the airbag **246** to the airbag activation device **245.** The communication between the control device **4a** and the implement **200** may be conducted through wired or wireless means. The multicopter **10** shown in FIG. **3B** further includes a connection mechanism **210** that connects the body **11** (or main body **4**) and the implement **200.**

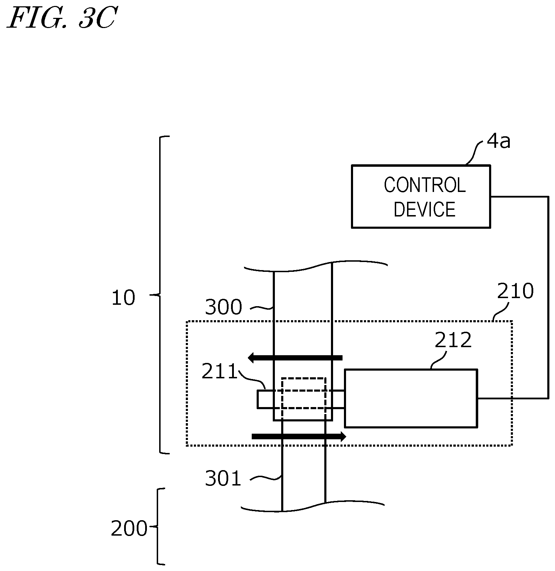

FIG. **3C** is a diagram schematically showing an example of the configuration of the connection mechanism **210** included in the multicopter **10.** As shown in FIG. **3C****,** the connection mechanism **210** is a structure that connects a frame **300** fixed to the body **11** (or main body **4**) and a frame **301** included in the implement **200.** The connection mechanism **210** includes a connection pin (connector) **211** and an actuator **212** that moves the connection pin **211.** In a state (connected state) where the multicopter **10** and the implement **200** are connected, the connection pin **211** is inserted into a hole formed in the frame **300** and a hole formed in the frame **301,** thereby connecting the frame **300** and the frame **301.** In a state (released state) where the connection between the multicopter **10** and the implement **200** is released, the connection pin **211** is removed from (taken out of) the hole formed in the frame **300** and the hole formed in the frame **301,** thereby releasing the connection between the frame **300** and the frame **301.**

The actuator **212** is, for example, a solenoid or the like that moves the connection pin (connector) **211** in a horizontal direction (in the direction of the arrow in FIG. **3C**). In the connected state, the actuator **212** maintains the connection pin (connector) **211** in a state where it is inserted into the respective holes of the frames **300** and **301,** and in the released state, the actuator **212** maintains the connection pin (connector) **211** in a state where it is separated from (taken out of) the respective holes of the frames **300** and **301.** The control device **4a** switches between the connected state and the released state by controlling the operation of the connection mechanism **210** (actuator **212**). When switching from the connected state to the separated state, the control device **4a** outputs a control signal to the actuator **212** to move the connection pin (connector) **211** in a direction to be separated from the respective holes of the frames **300** and **301.** When switching from the separated state to the connected state, the control device **4a** outputs a control signal to the actuator **212** to move the connection pin (connector) **211** in a direction to be inserted into the respective holes of the frames **300** and **301.** The configuration of the connection mechanism **210** described above is merely an example and is not limited to the illustrated example. The connection mechanism **210** may also be applied to the configuration examples shown in FIGS. **2A****,** **2B****,** or **2C****.**

By having the multicopter **10** include a parachute and an airbag as shown in the examples of FIGS. **3A** and **3B****,** it is possible to prepare for the occurrence of any abnormality (for example, failure of a rotor **2,** damage to a rotor **2,** failure of a rotation drive device that controls the rotation of a rotor **2,** etc.) while flying with the implement **200** connected.

The embodiments of the present disclosure are not limited to the illustrated examples. For example, the configuration example of FIG. **3A** may be combined with the configuration example of FIG. **3B****.** The configuration example of FIG. **3A** or FIG. **3B** may also be appropriately combined with other configuration examples (for example, the configuration examples of FIGS. **2B** and **2C**). In the configuration examples of FIGS. **3A** and **3B****,** one parachute and one airbag are illustrated, but each of the parachute and the airbag may be provided in plural. When a plurality of parachutes or a plurality of airbags is provided, a plurality of parachute activation devices or a plurality of airbag activation devices for controlling the activation of each parachute or airbag may be provided.

Additionally, the embodiments of the present disclosure are not limited to the examples of FIGS. **3A** and **3B****,** and the configuration examples of FIGS. **2A****,** **2B****,** or **2C** may be applied. The multicopter **10** shown in FIGS. **2A****,** **2B****,** or **2C** is capable of flying with an implement **200** connected to the body **11,** as shown in the example of FIG. **1C****,** and the control device **4a** can release the connection between the implement **200** and the body **11** by controlling the connection mechanism **210** when detecting an abnormality in the plurality of rotors **2** during flight. In such a case, it is also possible to prepare for the occurrence of any abnormality (for example, failure of a rotor **2,** damage to a rotor **2,** failure of a rotation drive device that controls the rotation of a rotor **2,** etc.) while flying with the implement **200** connected. The multicopter **10** shown in FIGS. **2A****,** **2B****,** or **2C** may further include the above-mentioned parachute and/or airbag, but the parachute and airbag are not essential.

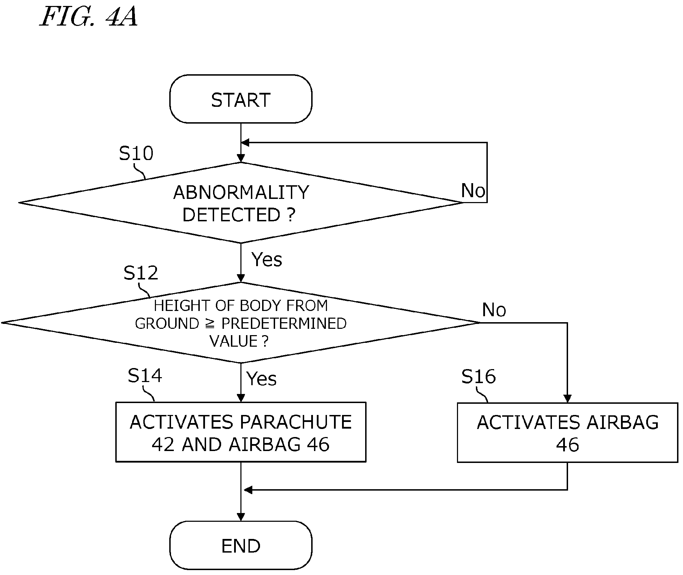

An example of the operation of the control device **4a** will be explained with reference to FIG. **4A.** FIG. **4A** is a flowchart showing an example of the operation of the control device **4a** in the case where the multicopter **10** has a parachute **42** connected to the body **11** and an airbag **46** provided on the body **11,** as shown in the configuration of FIG. **3A****.**

While the multicopter **10** is flying with the implement **200** connected to the body **11,** the control device **4a** determines at step **S10** whether any abnormality (for example, failure of a rotor **2,** damage to a rotor **2,** failure of a rotation drive device that controls the rotation of a rotor **2,** etc.) has occurred. For example, the control device **4a** may determine the total thrust that should be generated by the plurality of rotors **2** during flight of the multicopter **10,** and determine that an abnormality has occurred when the total thrust cannot be obtained by the plurality of rotors **2.**

When an abnormality is detected (in the case of "Yes"), the control device **4a** determines at step **S12** whether the height of the multicopter **10** from the ground (more specifically, the height of the body **11** from the ground) is equal to or greater than a predetermined value. The control device **4a** can obtain information on the height of the multicopter **10** from the ground using sensor data output from an altitude sensor included in the sensor group **4b.**

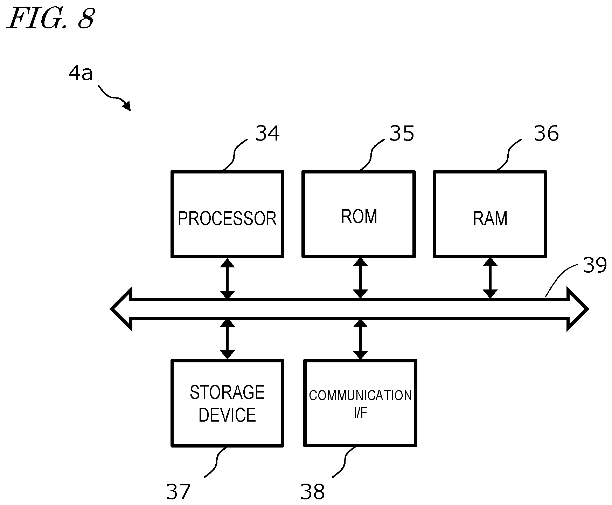

Examples of the altitude sensor include an atmospheric pressure sensor or a GNSS receiver. The altitude sensor outputs sensor data indicating the altitude of the multicopter **10.** Altitude is the height from the mean sea level to a measurement point in the air. The altitude of the multicopter **10** is the height from the mean sea level to the multicopter **10,** more specifically, the height from the mean sea level to the altitude sensor mounted on the multicopter **10.** For example, a GNSS receiver may measure the height from the mean sea level to the multicopter **10.** In this case, to obtain more accurate altitude, it is necessary to correct the measured height to the height from the geoid surface (or simply "geoid") to the multicopter **10,** taking into account the influence of gravity. Such correction processing may be performed by the GNSS receiver itself or by a processor **34** (see FIG. **8**) included in the control device **4a.** By combining an atmospheric pressure sensor and a GNSS receiver and complementing data with each other, it is possible to improve the accuracy of the measured altitude.

When it is determined that the height of the multicopter **10** from the ground is equal to or greater than a predetermined value, the control device **4a** activates the parachute **42** and the airbag **46** at step **S14.** The control device **4a** activates the parachute **42** and the airbag **46** by providing control signals to the parachute activation device **41** and the airbag activation device **45.** The control device **4a** may control the timing of activation of the parachute **42** and the airbag **46** such that the airbag **46** is activated after the parachute **42** is deployed.

When it is determined that the height of the multicopter **10** from the ground is less than the predetermined value, the control device **4a** activates the airbag **46** but does not activate the parachute **42** at step **S16.**

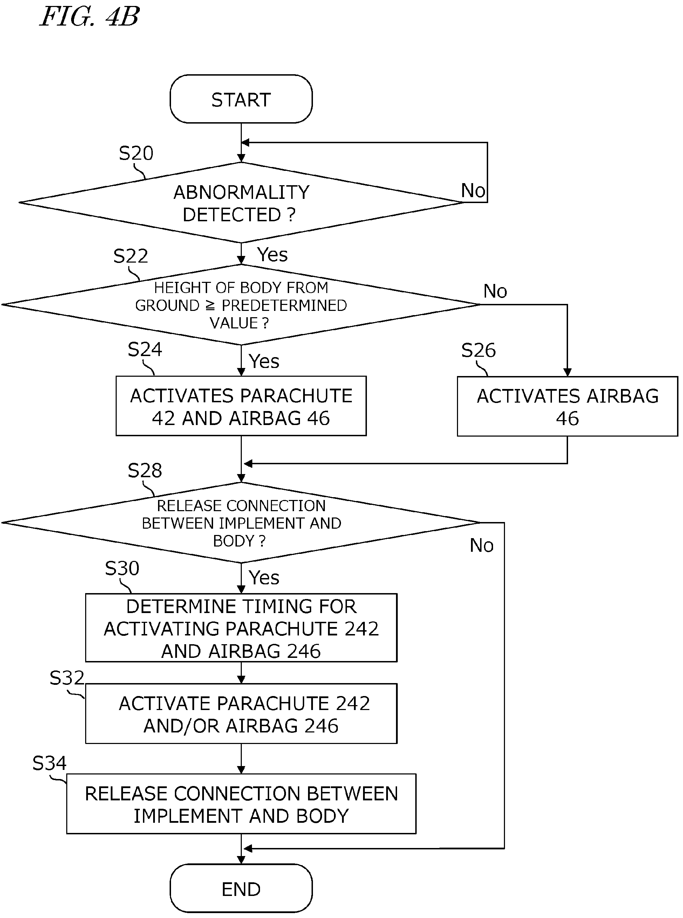

Another example of the operation of the control device **4a** will be explained with reference to FIG. **4B****.** Detailed explanations of steps common to the flowchart shown in FIG. **4A** will be omitted. The flowchart of FIG. **4B** shows an example of the operation of the control device **4a** in the case where the multicopter **10** has a parachute **42** connected to the body **11,** an airbag **46** provided on the body **11,** a parachute **242** connected to the implement **200,** and an airbag **246** provided on the implement **200,** as shown in the configurations of FIGS. **3A** and **3B****.** As shown in FIG. **4B****,** the control device **4a** may release the connection between the implement **200** and the body **11** by controlling the connection mechanism **210.** By releasing the connection between the implement **200** and the body **11,** the total thrust that should be generated by the plurality of rotors **2** can be reduced by the weight of the implement **200.**

Steps **S20, S22, S24,** and **S26** may be performed in the same manner as steps **S10, S12, S14,** and **S16** in FIG. **4A****.**

At step **S28,** the control device **4a** determines whether to release the connection between the implement **200** and the body **11.** The determination of whether to release the connection between the implement **200** and the body **11** may be made based on, for example, the flight altitude of the multicopter **10,** the flight speed of the multicopter **10,** the height of the implement **200** from the ground, the height of the body **11** from the ground, the type (content) of the detected abnormal condition, the remaining amount of fuel, the state of charge, the distance to an area where the implement **200** is able to be dropped, and so on. The control device **4a** may also determine the position for releasing the connection between the implement **200** and the body **11** at step **S28.** For example, the control device **4a** may decide whether to execute the release at the current position of the multicopter **10,** or, if an area more suitable for dropping the implement **200** is within a reachable distance, the control device **4a** may decide to move the multicopter **10** to that area and then perform the release. For example, when an abnormality of a rotor **2** is detected while the multicopter **10** is flying over a field, the control device **4a** may decide to move the multicopter **10** over an area of the field where work has not yet been performed, and release the connection between the implement **200** and the body **11** over that area.

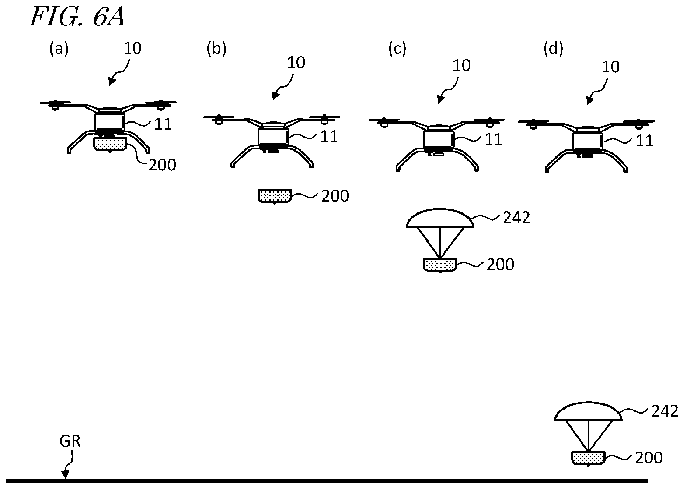

When it is determined to release the connection between the implement **200** and the body **11,** the control device **4a** determines the timing for activating the parachute **242** and the airbag **246** at step **S30.** Specific examples of the timing for activating the parachute **242** and the airbag **246** when releasing the connection between the implement **200** and the body **11** will be described later with reference to FIGS. **6A** to **6F.** At step **S30,** the control device **4a** may decide whether to activate the parachute **242** based on the height of the body **11** from the ground and the height of the implement **200** from the ground. The control device **4a** may determine whether the height of the implement **200** from the ground is equal to or greater than a predetermined value, and decide to activate the parachute **242** if the height of the implement **200** from the ground is determined to be equal to or greater than the predetermined value.

At step **S32,** the control device **4a** activates the parachute **242** and/or the airbag **246.** The control device **4a** provides control signals to the parachute activation device **241** and the airbag activation device **245** so that the parachute **242** and the airbag **246** are activated at the determined timing.

At step **S34,** the control device **4a** releases the connection between the implement **200** and the body **11** by controlling the connection mechanism **210.**

The order of the flowchart in FIG. **4B** may be rearranged as appropriate. The control device **4a** may execute multiple steps simultaneously. For example, steps **S30, S32,** and **S34** may be executed simultaneously.

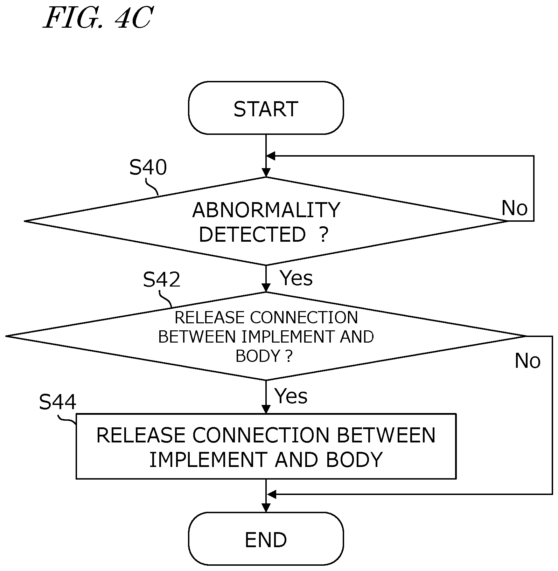

Another example of the operation of the control device **4a** will be explained with reference to FIG. **4C.** FIG. **4C** is a flowchart showing an example of the operation of the control device **4a** of the multicopter **10** shown in FIGS. **2A****,** **2B****,** or **2C****.**

While the multicopter **10** is flying with the implement **200** connected to the body **11,** the control device **4a** determines at step **S40** whether any abnormality (for example, failure of a rotor **2,** damage to a rotor **2,** failure of a rotation drive device that controls the rotation of a rotor **2,** etc.) has occurred. Step **S40** may be performed in the same manner as step **S10** in FIG. **4A****.** If it is determined that an abnormality has occurred (in the case of "Yes"), the process proceeds to step **S42.**

At step **S42,** the control device **4a** determines whether to release the connection between the implement **200** and the body **11.** Step **S42** may be performed in the same manner as step **S28** in FIG. **4B****.** If it is determined to release the connection between the implement **200** and the body **11** (in the case of "Yes"), the control device **4a** releases the connection between the implement **200** and the body **11** by controlling the connection mechanism **210** at step **S44.**

The flowcharts shown in FIGS. **4A****,** **4B****,** and **4C** are examples of the operation of the control device **4a** and may be modified as appropriate.

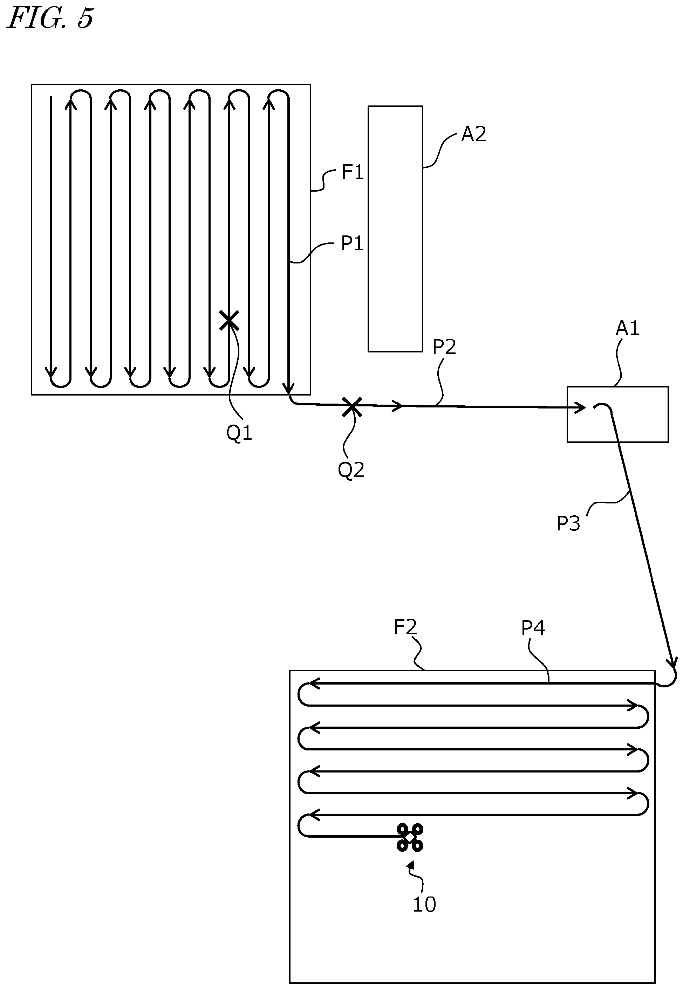

FIG. **5** is a plan view schematically showing the flight path of the multicopter **10** according to the present embodiment. As will be explained with reference to FIG. **5****,** the control device **4a** that controls the flight of the multicopter **10** can release the connection between the implement **200** and the body **11** (that is, detach the implement **200** from the body **11**) during flight of the multicopter **10.** The detachment of the implement **200** may be performed as a countermeasure in case of an abnormality (for example, failure of a rotor **2,** damage to a rotor **2,** failure of a rotation drive device that controls the rotation of a rotor **2,** etc.) occurring while the multicopter **10** is flying with the implement **200** connected, as explained with reference to FIG. **5****.**

In the example shown in FIG. **5****,** the multicopter **10** moves along flight paths **P1, P2, P3,** and **P4,** automatically or autonomously, or by remote control.

In a field **F1,** the flight path **P1** meanders regularly in order to perform agricultural work (ground work) such as spraying agricultural chemicals or fertilizers while flying. The implement **200** connected to the body **11** of the multicopter **10** performs agricultural work. Even when the implement **200** connected to the body **11** of the multicopter **10** performs agricultural work, it may be expressed as "the multicopter **10** performs agricultural work". The multicopter **10** performs necessary work (ground work) on areas where crops exist or on the ground itself in the field **F1.** To perform such work, the flight altitude of the multicopter **10** on the flight path **P1** may be controlled at a preferred level within the range of, for example, 0.1 m or more and 5 m or less.

After completing work in the field **F1,** the multicopter **10** moves to an area **A1** via the flight path **P2.** For simplicity, the length of the flight path **P2** is shown as short in the figure, but the actual length of the flight path **P2** may be, for example, several hundred meters or more. The flight altitude of the multicopter **10** moving along the flight path **P2** is higher than the flight altitude of the multicopter **10** on the flight path **P1** within the field **F1,** for example, 30 m or more and 150 m or less.

In the area **A1,** the multicopter **100** may, for example, descend and land, and operations such as replenishment of agricultural materials, charging of the multicopter **10,** or refueling may be performed. The multicopter **10** that takes off from the area **A1** moves to a field **F2** via the flight path **P3.** Upon reaching the field **F2,** the multicopter **10** performs ground work along the flight path **P4.**

For example, when the control device **4a** detects an abnormality of the rotor **2** at position **Q1** in the middle of the flight path **P1** within the field **F1,** the multicopter **10** may, for example, release the connection between the implement **200** and the body **11** at that point (that is, within the field **F1**). Alternatively, if the multicopter **10** is able to move, it may move to an area of the field **F1** where agricultural work by the implement **200** has not yet been performed, and then release the connection between the implement **200** and the body **11.** After detaching the implement **200,** the multicopter **10** may move to the nearest possible landing area **A2.** In this case, the control device **4a** changes the flight path from the planned flight path **P1** and creates a flight path leading to the area **A2.**

When the control device **4a** detects an abnormality of the rotor **2** at a point **Q2** on the flight path **P2** between the field **F1** and the field **F2,** the multicopter **10** may, for example, release the connection between the implement **200** and the body **11.** If the multicopter **10** is able to move, it may move to the nearest area more suitable for dropping the implement **200** (for example, the area **A2** or the field **F1** owned by the user) and then release the connection between the implement **200** and the body **11.** In this case, the control device **4a** changes the flight path from the planned flight path **P2** and creates a flight path leading to the area **A2** or the field **F1.** If the area **A1** is an area where the implement **200** can be detached from the body **11,** the multicopter **10** may move to the area **A1** without changing the flight path **P2** and detach the implement **200** from the body **11** above the area **A1.**

Areas where the implement **200** can be dropped may be, for example, previously stored in the storage device **37** (see FIG. **8**) included in the control device **4a** by the user. When detecting an abnormality of the rotor **2** during flight, the control device **4a** may select the closest area from among the areas where the implement **200** can be dropped, and move the multicopter **10** to the selected area.

Since the flight altitude of the multicopter **10** on the flight path **P2** is higher than the flight altitude of the multicopter **10** on the flight path **P1** within the field **F1,** it is preferable to deploy the parachute **42** when an abnormality is detected on the flight path **P2.**

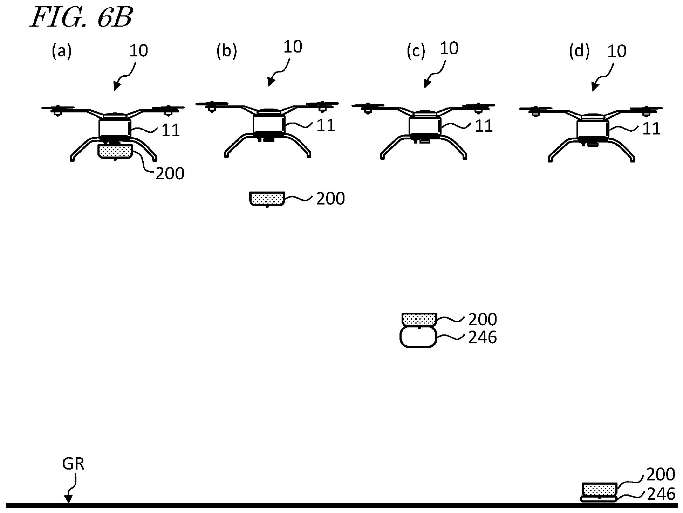

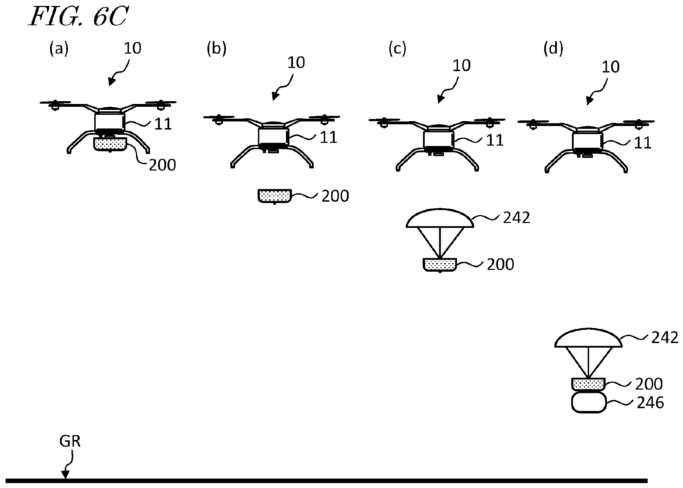

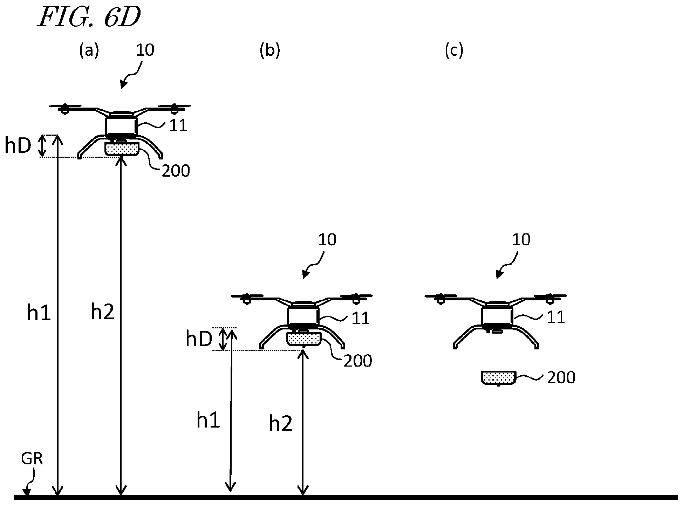

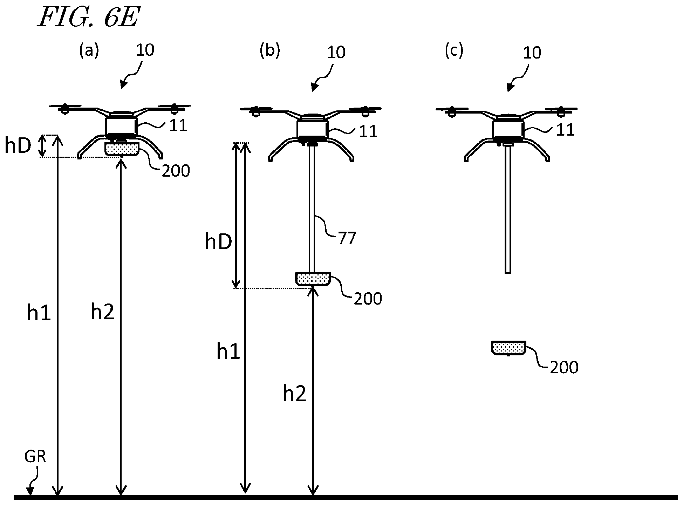

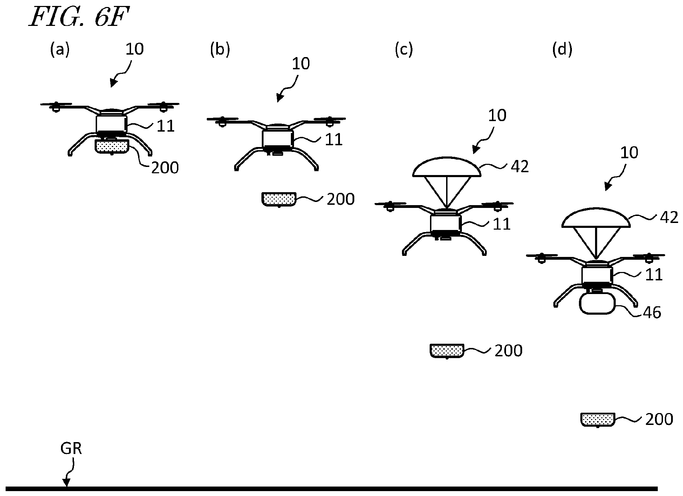

FIGS. **6A, 6B, 6C, 6D, 6E,** and **6F** are diagrams schematically showing how the multicopter **10,** which is flying with the implement **200** connected to the body **11,** releases the connection between the implement **200** and the body **11** during flight. The sequence is shown from left to right in the figure, that is, in the order of (a), (b), (c), and (d) along the timeline.

In the examples of FIGS. **6A** to **6E,** as shown in the configuration of FIG. **3B****,** the multicopter **10** has a parachute **242** connected to the implement **200** and an airbag **246** provided on the implement **200.** By activating the parachute **242** and/or the airbag **246** when the control device **4a** detaches the implement **200** from the body **11,** it is possible to mitigate the impact when the implement **200** collides with the ground.

In the example of FIG. **6A,** the control device **4a** deploys the parachute **242** when releasing the connection between the implement **200** and the body **11** during flight. In the illustrated example, the parachute **242** is deployed (FIG. **6A (c)**) after the connection between the implement **200** and the body **11** is released (FIG. **6A** (b)), but the order of the timing of releasing the connection between the implement **200** and the body **11** and the timing of deploying the parachute **242** is not particularly limited.

The control device **4a** may, for example, deploy the parachute **42** only when the height of the implement **200** from the ground **GR** is equal to or greater than a predetermined value, and may not deploy the parachute **42** when the height of the implement **200** from the ground **GR** is less than the predetermined value. The control device **4a** can calculate the height of the implement **200** from the ground **GR** using sensor data output from an altitude sensor included in the sensor group **4b.** Information indicating the height difference between the altitude sensor mounted on the body **11** of the multicopter **10** and the implement **200** is stored in the storage device **37** of the control device **4a,** for example, by the user. The control device **4a** can calculate the height of the implement **200** from the ground **GR** using, for example, the information indicating the height difference between the altitude sensor and the implement **200,** and the sensor data output from the altitude sensor.

In the example of FIG. **6B,** the control device **4a** activates the airbag **246** when releasing the connection between the implement **200** and the body **11** during flight. The airbag **246** is, for example, stored in an airbag storage portion provided at the lower part of the implement **200.** The airbag **246** is, for example, stored so as to be positioned at the lower part of the implement **200** when activated. The airbag **246** may have a configuration that becomes smaller (deflates) when it detects impact upon collision with the ground **GR,** as shown in FIG. **6B** (d).

As shown in the example of FIG. **6C,** both the parachute **242** and the airbag **246** may be activated. By using both the parachute **242** connected to the implement **200** and the airbag **246** provided on the implement **200,** the impact when the implement **200** collides with the ground **GR** can be further mitigated. The control device **4a** may control the parachute **242** and the airbag **246** such that the airbag **246** is activated (FIG. **6C** (d)) after the parachute **242** is deployed (FIG. **6C** (c)).

In the examples shown in FIGS. **6D** and **6E,** the control device **4a** lowers the height **h2** of the implement **200** from the ground **GR** (FIGS. **6D** and **6E (b)**) before releasing the connection between the implement **200** and the body **11** during flight (FIGS. **6D** and **6E(c)**). By reducing the height **h2** of the implement **200** from the ground **GR** (that is, bringing the implement **200** closer to the ground **GR**) when releasing the connection between the implement **200** and the body **11,** the impact when the implement **200** collides with the ground **GR** can be reduced. For example, as shown in the example of FIG. **6D,** the control device **4a** may lower both the height **h1** of the body **11** from the ground **GR** and the height **h2** of the implement **200** from the ground **GR** before releasing the connection between the implement **200** and the body **11,** where the difference **hD** between the height **h1** of the body **11** from the ground **GR** and the height **h2** of the implement **200** from the ground **GR** does not change. Alternatively, as shown in the example of FIG. **6E,** the height **h2** of the implement **200** from the ground **GR** may be reduced by increasing the difference **hD** between the height **h1** of the body **11** from the ground **GR** and the height **h2** of the implement **200** from the ground **GR** (that is, the distance between the implement **200** and the body **11).** For example, the length of the suspension rope (rope) **77** suspending the implement **200** from the body **11** may be increased while maintaining the altitude of the body **11.**

In the example of FIG. **6F,** as in the configuration example shown in FIG. **3A****,** the multicopter **10** has a parachute **42** connected to the body **11** (here, the main body **4**) and an airbag **46** provided on the body **11** (here, the main body **4**)**.** In the example of FIG. **6F,** the control device **4a** deploys the parachute **42** when releasing the connection between the implement **200** and the body **11** during flight. In the illustrated example, the parachute **42** is deployed (FIG. **6F(c)** ) after the connection between the implement **200** and the body **11** is released (FIG. **6F (b)**), but the order of the timing of releasing the connection between the implement **200** and the body **11** and the timing of deploying the parachute **42** is not particularly limited. Also, the control device **4a** activates the airbag **46** when releasing the connection between the implement **200** and the body **11** during flight. The control device **4a** may control the parachute **42** and the airbag **46** such that the airbag **46** is activated (FIG. **6F (d)**) after the parachute **42** is deployed (FIG. **6F(c)** ). The airbag **46** is, for example, stored in an airbag storage portion provided at the lower part of the body **11.** The airbag **46** is, for example, stored so as to be positioned at the lower part of the body **11** when activated.

The examples of FIGS. **6A** to **6F** can be combined as appropriate.

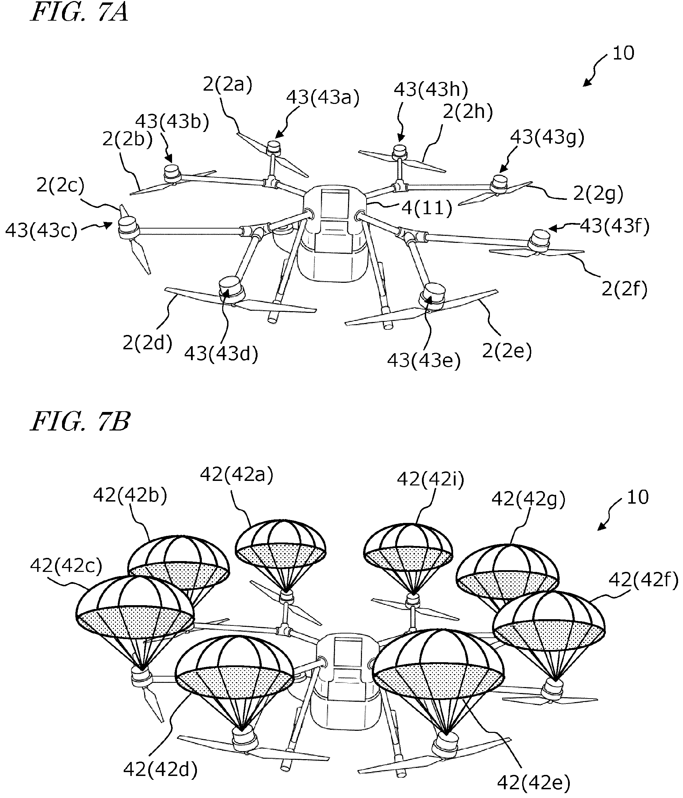

FIGS. **7A** and **7B** are perspective views schematically showing other examples of the configuration of the multicopter **10.**

In the examples shown in FIGS. **7A** and **7B****,** the multicopter **10** includes a plurality of parachutes **42,** each provided corresponding to one of the plurality of rotors **2.** FIG. **7A** schematically shows a state where the parachutes **42** are not activated (deployed), and FIG. **7B** schematically shows a state where all of the plurality of parachutes **42** are deployed. For simplicity, the illustration of the implement is omitted in FIGS. **7A** and **7B****.** Parachutes **42a, 42b, 42c, 42d, 42e, 42f, 42g,** and **42h** are respectively provided corresponding to rotors **2a, 2b, 2c, 2d, 2e, 2f, 2g,** and **2h** of the multicopter **10.** Each of the plurality of parachutes **42 (42a** to **42h)** is stored in a parachute storage portion **43 (43a** to **43h)** provided above the corresponding rotor **2** (**2a** to **2h**). FIGS. **7A** and **7B** show an example of an octocopter with 8 rotors, but the configuration of the multicopter **10** is not limited to this and may be applied to, for example, a quadcopter.

In the example of FIGS. **7A** and **7B****,** when the control device **4a** detects an abnormality in any of the plurality of rotors **2** during flight, it stops the rotor **2** where the abnormality was detected and deploys the parachute **42** corresponding to the rotor **2** where the abnormality was detected from among the plurality of parachutes **42.** For example, when an abnormality is detected in the rotor **2a,** the rotor **2a** is stopped and the parachute **42a** is deployed. When only some of the plurality of rotors **2** are stopped, it may not be possible to accurately control the attitude of the multicopter **10,** and the multicopter **10** may tilt. In contrast, by deploying the parachute **42** corresponding to the stopped rotor **2,** it is possible to maintain balance with the other rotors **2** and maintain the attitude of the multicopter **10** horizontal. The control device **4a** may also lower the rotation speed of the other rotors **2** as necessary.

Alternatively, when the control device **4a** detects an abnormality in any of the plurality of rotors **2** during flight, it may stop both the rotor **2** where the abnormality was detected and the rotor **2** positioned on the diagonal line of the rotor where the abnormality was detected. For example, when an abnormality is detected in rotor **2a,** both rotor **2a** and rotor **2e** are stopped. The control device **4a** may further deploy the parachutes **42** corresponding to the stopped rotors **2.**

When the multicopter **10** is equipped with the fourth rotation drive device **3D** shown in FIG. **1A****,** a part of the plurality of rotors **2** is rotated by the motors **14,** and the other rotors **2** are rotated by the internal combustion engine **7a.** In such a case, when the control device **4a** detects, during flight, an abnormality in any of the rotors **2** that are rotated by the motors **14** among the plurality of rotors **2,** it may stop all rotors **2** that are rotated by the motors **14.** The diameter of one or more rotors **2** rotated by the internal combustion engine **7a** may be larger than the diameter of the other rotors **2** rotated by the motors **14.** The one or more rotors **2** rotated by the internal combustion engine **7a** may be called main rotors, and the other rotors **2** rotated by the motors **14** may be called sub-rotors. In such a case, the main rotors are mainly used for generating thrust, and the sub-rotors are used for generating thrust and attitude control.

The control device **4a** in the embodiment of the present disclosure may be realized by a digital computer system programmed to execute each process described with reference to FIGS. **4A** and **4B****.**

FIG. **8** is a block diagram showing an example of the hardware configuration of the control device **4a.** The control device **4a** includes a processor **34,** ROM (Read Only Memory) **35,** RAM (Random Access Memory) **36,** storage device **37,** and communication I/F **38.** These components are interconnected via a bus **39.**

The processor **34** is one or more semiconductor integrated circuits, also referred to as a central processing unit (CPU) or microprocessor. The processor **34** sequentially executes computer programs stored in ROM **35** to implement the aforementioned processing. The term processor **34** is broadly interpreted to encompass devices such as FPGA (Field Programmable Gate Array) with CPU, GPU (Graphic Processor Unit), ASIC (Application Specific Integrated Circuit), or ASSP (Application Specific Standard Product).

The ROM **35** is, for example, a writable memory (for example, PROM), rewritable memory (for example, flash memory), or read-only memory. The ROM **35** stores programs that control the operation of the processor. The ROM **35** need not be a single recording medium but may be a collection of a plurality of recording media. Part of the plurality of collections may be removable memory.

The RAM **36** provides a work area for temporarily expanding programs stored in the ROM **35** during boot-up. The RAM **36** need not be a single recording medium but may be a collection of a plurality of recording media.

The communication I/F **38** is an interface for communication between the control device **4a** and other electronic components or electronic control units (ECUs). For example, the communication I/F **38** may perform wired communication complying with various protocols. The communication I/F **38** may perform wireless communication complying with Bluetooth^{®} standards and/or Wi-Fi^{®} standards. Both standards include wireless communication standards utilizing the 2.4 GHz frequency band.

The storage device **37** may be, for example, a semiconductor memory, magnetic storage device, or optical storage device, or a combination thereof. The storage device **37** is configured to store, for example, map data useful for autonomous flight of the multicopter **10,** and various sensor data acquired by the multicopter **10** during flight.

Note that, as mentioned earlier, the control device **4a** may include, for example, a flight control device such as a flight controller and a higher-level computer (companion computer). The companion computer may execute each of the processes shown in FIGS. **4A** and **4B** and provide commands regarding flight to the flight controller based on the results of those processes.

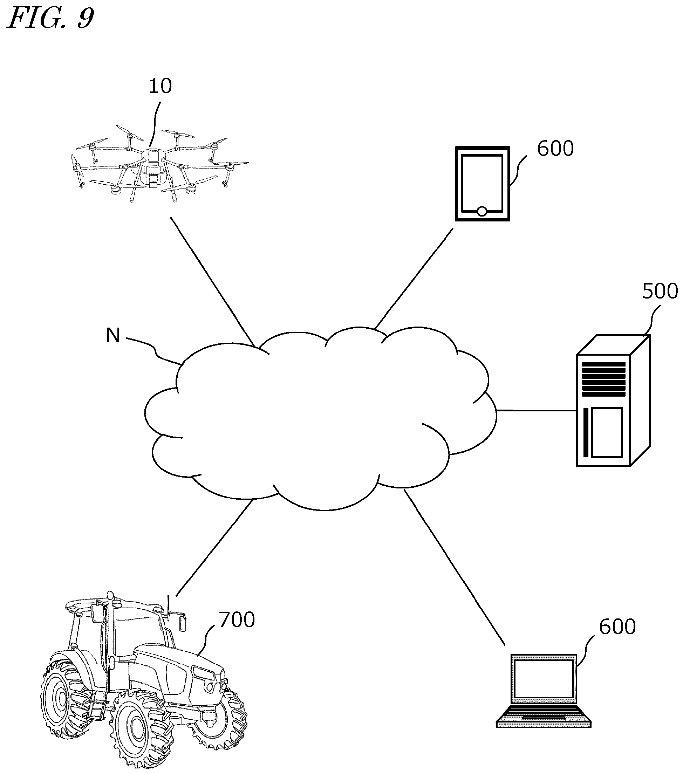

FIG. **9** is a schematic diagram showing an example of a system including the multicopter **10.** One or more servers (computers) **500** or terminal devices (including mobile and stationary types) **600** connected to the communication device **4c** of the multicopter **10** via a communication network **N** may realize part or all of the functions of the control device **4a.** Agricultural machines **700** such as tractors may also be connected to the communication network **N,** and communication may be performed between the multicopter **10** and the agricultural machines **700.** Through the communication network **N,** part of the data used for processing by the control device **4a** and control signals for the multicopter **10** may be provided to the multicopter 10 from the agricultural machines **700.**

This specification discloses solutions described in the following items.

### [Item 1]

An unmanned aerial vehicle comprising a plurality of rotors, the unmanned aerial vehicle being capable of flying with a ground work machine connected to a body, the unmanned aerial vehicle comprising:
a control device that controls flight of the unmanned aerial vehicle;
at least one parachute connected to the body or the ground work machine; and
at least one airbag provided on the body or the ground work machine.

### [Item 2]

The unmanned aerial vehicle according to Item 1, wherein the control device is capable of releasing a connection between the ground work machine and the body during flight.

### [Item 3]

The unmanned aerial vehicle according to Item 2, wherein the control device lowers a height of the ground work machine from the ground before releasing the connection between the ground work machine and the body during flight.

### [Item 4]

The unmanned aerial vehicle according to Item 3, wherein the control device increases a distance between the ground work machine and the body before releasing the connection between the ground work machine and the body during flight.

### [Item 5]

The unmanned aerial vehicle according to any one of Items 2 to 4, wherein the control device releases the connection between the ground work machine and the body when detecting an abnormality of the plurality of rotors during flight.

### [Item 6]

The unmanned aerial vehicle according to Item 5, wherein
the control device determines a total thrust that is a sum of thrust to be generated by the plurality of rotors during flight, and
the control device releases the connection between the ground work machine and the body during flight when the determined total thrust cannot be obtained by the plurality of rotors.

### [Item 7]

The unmanned aerial vehicle according to Item 5, wherein the control device, when detecting an abnormality of the plurality of rotors during flight over a field, moves the unmanned aerial vehicle over an area of the field where work has not yet been performed, and releases the connection between the ground work machine and the body over the area.

### [Item 8]

The unmanned aerial vehicle according to Item 7, wherein the work includes agricultural work by the ground work machine.

### [Item 9]

The unmanned aerial vehicle according to any one of Items 2 to 8, wherein the at least one parachute includes a first parachute connected to the ground work machine, and
the control device deploys the first parachute when releasing the connection between the ground work machine and the body during flight.

### [Item 10]

The unmanned aerial vehicle according to Item 9, wherein the control device, when releasing the connection between the ground work machine and the body during flight,
deploys the first parachute when a height of the ground work machine from the ground is equal to or greater than a predetermined value, and
does not deploy the first parachute when a height of the ground work machine from the ground is less than the predetermined value.

### [Item 11]

The unmanned aerial vehicle according to any one of Items 1 to 10, wherein the at least one airbag includes a first airbag provided on the ground work machine.

### [Item 12]

The unmanned aerial vehicle according to any one of Items 2 to 10, wherein
the at least one airbag includes a first airbag provided on the ground work machine, and
the control device activates the first airbag when releasing the connection between the ground work machine and the body during flight.

### [Item 13]

The unmanned aerial vehicle according to Item 12 as depending from Item 9 or 10, wherein
the at least one airbag includes a first airbag provided on the ground work machine, and
the control device activates the first airbag after deploying the first parachute.

### [Item 14]

The unmanned aerial vehicle according to any one of Items 1 to 14, wherein the at least one airbag includes a second airbag provided at a lower portion of the body.

### [Item 15]

The unmanned aerial vehicle according to any one of Items 1 to 14, wherein the control device, when detecting an abnormality in any of a plurality of first rotors included in the plurality of rotors during flight, stops all of the plurality of first rotors.

### [Item 16]

The unmanned aerial vehicle according to any one of Items 1 to 14, wherein
the at least one parachute includes a plurality of second parachutes, each provided corresponding to any of a plurality of first rotors included in the plurality of rotors, and
the control device, when detecting an abnormality in any of the plurality of first rotors during flight, stops the first rotor where the abnormality was detected and deploys the second parachute corresponding to the first rotor where the abnormality was detected from among the plurality of second parachutes.

### [Item 17]

The unmanned aerial vehicle according to any one of Items 1 to 14, wherein the control device, when detecting an abnormality in any of a plurality of first rotors included in the plurality of rotors during flight, stops both the first rotor where the abnormality was detected and the first rotor positioned on a diagonal line of the first rotor where the abnormality was detected.

### [Item 18]

The unmanned aerial vehicle according to any one of Items 15 to 17, wherein the control device controls an attitude of the unmanned aerial vehicle by controlling rotation of the plurality of first rotors during flight.

### [Item 19]

The unmanned aerial vehicle according to any one of Items 15 to 18, further comprising:
a first rotation drive device that drives the plurality of first rotors; and
a second rotation drive device that drives at least one second rotor included in the plurality of rotors, wherein
the first rotation drive device includes a plurality of electric motors that respectively drive the plurality of first rotors, and
the second rotation drive device includes an internal combustion engine.

### [Item 20]

An unmanned aerial vehicle comprising a plurality of rotors, the unmanned aerial vehicle being capable of flying with a ground work machine connected to a body, the unmanned aerial vehicle comprising:
a control device that controls flight of the unmanned aerial vehicle, wherein
the control device releases a connection between the ground work machine and the body when detecting an abnormality of the plurality of rotors during flight.

### [Item 21]

The unmanned aerial vehicle according to Item 20, wherein the control device, when detecting an abnormality of the plurality of rotors during flight over a field, moves the unmanned aerial vehicle over an area of the field where work has not yet been performed, and releases the connection between the ground work machine and the body over the area.

### INDUSTRIAL APPLICABILITY

The unmanned aerial vehicle according to the present disclosure may be widely utilized not only for aerial photography, surveying, logistics, and agricultural chemical spraying applications but also for ground work related to agriculture, transportation of harvested crops and agricultural materials.

### REFERENCE SIGNS LIST

**2...** rotor (propeller), **3**...rotation drive device, **4**...main body, **4a**...control device, **4b**...sensors, **4c**...communication device, **5**...body frame, **10**...multicopter, **11**...body, **12**...sub-rotor, **12**a...propeller, **12**b...propeller, **14**...motor, **16**...ESC, **22**...main rotor, **52**...battery, **42**...parachute, **46**...airbag, **200**...implement, **242**...parachute, **246**...airbag

## Claims

1. An unmanned aerial vehicle comprising a plurality of rotors, the unmanned aerial vehicle being capable of flying with a ground work machine connected to a body, the unmanned aerial vehicle comprising:
a control device that controls flight of the unmanned aerial vehicle;
at least one parachute connected to the body or the ground work machine; and
at least one airbag provided on the body or the ground work machine.

2. The unmanned aerial vehicle according to Claim 1, wherein the control device is capable of releasing a connection between the ground work machine and the body during flight.

3. The unmanned aerial vehicle according to Claim 2, wherein the control device lowers a height of the ground work machine from the ground before releasing the connection between the ground work machine and the body during flight.

4. The unmanned aerial vehicle according to Claim 3, wherein the control device increases a distance between the ground work machine and the body before releasing the connection between the ground work machine and the body during flight.

5. The unmanned aerial vehicle according to any one of Claims 2 to 4, wherein the control device releases the connection between the ground work machine and the body when detecting an abnormality of the plurality of rotors during flight.

6. The unmanned aerial vehicle according to Claim 5, wherein
the control device determines a total thrust that is a sum of thrust to be generated by the plurality of rotors during flight, and
the control device releases the connection between the ground work machine and the body during flight when the determined total thrust cannot be obtained by the plurality of rotors.

7. The unmanned aerial vehicle according to Claim 5, wherein the control device, when detecting an abnormality of the plurality of rotors during flight over a field, moves the unmanned aerial vehicle over an area of the field where work has not yet been performed, and releases the connection between the ground work machine and the body over the area.

8. The unmanned aerial vehicle according to Claim 7, wherein the work includes agricultural work by the ground work machine.

9. The unmanned aerial vehicle according to any one of Claims 2 to 8, wherein the at least one parachute includes a first parachute connected to the ground work machine, and
the control device deploys the first parachute when releasing the connection between the ground work machine and the body during flight.

10. The unmanned aerial vehicle according to Claim 9, wherein the control device, when releasing the connection between the ground work machine and the body during flight,
deploys the first parachute when a height of the ground work machine from the ground is equal to or greater than a predetermined value, and
does not deploy the first parachute when a height of the ground work machine from the ground is less than the predetermined value.

11. The unmanned aerial vehicle according to any one of Claims 1 to 10, wherein the at least one airbag includes a first airbag provided on the ground work machine.

12. The unmanned aerial vehicle according to any one of Claims 2 to 10, wherein
the at least one airbag includes a first airbag provided on the ground work machine, and
the control device activates the first airbag when releasing the connection between the ground work machine and the body during flight.

13. The unmanned aerial vehicle according to Claim 12 as depending from Claim 9 or 10, wherein
the at least one airbag includes a first airbag provided on the ground work machine, and
the control device activates the first airbag after deploying the first parachute.

14. The unmanned aerial vehicle according to any one of Claims 1 to 13, wherein the at least one airbag includes a second airbag provided at a lower portion of the body.

15. The unmanned aerial vehicle according to any one of Claims 1 to 14, wherein the control device, when detecting an abnormality in any of a plurality of first rotors included in the plurality of rotors during flight, stops all of the plurality of first rotors.

16. The unmanned aerial vehicle according to any one of Claims 1 to 14, wherein
the at least one parachute includes a plurality of second parachutes, each provided corresponding to any of a plurality of first rotors included in the plurality of rotors, and
the control device, when detecting an abnormality in any of the plurality of first rotors during flight, stops the first rotor where the abnormality was detected and deploys the second parachute corresponding to the first rotor where the abnormality was detected from among the plurality of second parachutes.

17. The unmanned aerial vehicle according to any one of Claims 1 to 14, wherein the control device, when detecting an abnormality in any of a plurality of first rotors included in the plurality of rotors during flight, stops both the first rotor where the abnormality was detected and the first rotor positioned on a diagonal line of the first rotor where the abnormality was detected.

18. The unmanned aerial vehicle according to any one of Claims 15 to 17, wherein the control device controls an attitude of the unmanned aerial vehicle by controlling rotation of the plurality of first rotors during flight.

19. The unmanned aerial vehicle according to any one of Claims 15 to 18, further comprising:
a first rotation drive device that drives the plurality of first rotors; and
a second rotation drive device that drives at least one second rotor included in the plurality of rotors, wherein
the first rotation drive device includes a plurality of electric motors that respectively drive the plurality of first rotors, and
the second rotation drive device includes an internal combustion engine.

20. An unmanned aerial vehicle comprising a plurality of rotors, the unmanned aerial vehicle being capable of flying with a ground work machine connected to a body, the unmanned aerial vehicle comprising:
a control device that controls flight of the unmanned aerial vehicle, wherein
the control device releases a connection between the ground work machine and the body when detecting an abnormality of the plurality of rotors during flight.

21. The unmanned aerial vehicle according to Claim 20, wherein the control device, when detecting an abnormality of the plurality of rotors during flight over a field, moves the unmanned aerial vehicle over an area of the field where work has not yet been performed, and releases the connection between the ground work machine and the body over the area.
